# EUROPÄISCHE PATENTSCHRIFT

(11) **EP 2 591 648 B1**
(45) Veröffentlichungstag und Bekanntmachung des Hinweises auf die Patenterteilung: **21.03.2018**
(21) Anmeldenummer: 12192200.9
(22) Anmeldetag: 12.11.2012
(51) Int. Cl.: A01B 15/04, A01B 33/10

(54) **Schneid- und/oder Mischwerkzeug, insbesondere Schar, für ein landwirtschaftliches Gerät, insbesondere für ein Bodenbearbeitungsgerät**
Cutting and/or mixing tool, in particular share, for an agricultural device, in particular for a soil cultivation device
Outil de mélange et/ou de découpe, notamment un soc, pour un appareil agricole, notamment pour un appareil de traitement de sol

(30) Priorität: 12.11.2011 DE 102011118212; 29.11.2011 DE 102011119629
(43) Veröffentlichungstag der Anmeldung: 15.05.2013
(73) Patentinhaber: HTU Verschleißtechnik OHG, 29525 Uelzen (DE)
(72) Erfinder: Naeve, Thomas, 29525 Uelzen (DE); Naeve, Frens H., 29525 Uelzen (DE)
(74) Vertreter: Patentanwälte Thömen & Körner

(56) Entgegenhaltungen:
- EP-A1- 0 209 132
- EP-A1- 0 923 851
- EP-A1- 1 346 621
- GB-A- 1 202 720
- US-A- 5 427 186
- US-A1- 2005 167 126

## Beschreibung

Die Erfindung betrifft ein Schneid- und/oder Mischwerkzeug, vorzugsweise ein Schar, für ein landwirtschaftliches Gerät, insbesondere für ein Bodenbearbeitungsgerät.
In Ackerbaubetrieben nehmen die Arbeitserledigungskosten für Ernte, Bodenbearbeitung, Saatbett und Saat sowie Pflanzenschutz einen großen Teil der Gesamtkosten ein. Dabei liegt insbesondere im Bereich der Bodenbearbeitung bei den Verschleißteilen landwirtschaftlicher Geräte großes Einsparpotential. Diese unterscheiden sich im Verschleißverhalten, im Zugkraftbedarf, im Kraftstoffverbrauch, aber auch im Preis.
Zu den Verschleißteilen von Bodenbearbeitungsmaschinen gehören Schneid- und/oder Mischwerkzeuge, insbesondere Schare. Weitere Schneidwerkzeuge können auch Scharspitzen für sich, Scharblätter oder auch Meißel für Tiefenlockerer sein.

Ein Wechsel vorgenannter Schneid- und/oder Mischwerkzeuge ist bei der Bodenbearbeitungsgeräten gerade während der Bodenbearbeitung unerwünscht, da die Bodenbearbeitung hierzu unterbrochen werden muss. Je nach erforderlichem Arbeitszeitsaufwand für den Wechsel der Schneid- und/oder Mischwerkzeuge, insbesondere der Schare, sowie dessen verschleißbedingter Häufigkeit reduziert sich die Saisonleistung eines Bodenbearbeitungsgerätes. Dies kann ein hoher Kostenfaktor sein.

Es ist daher von Vorteil, die Nutzungsdauer derartiger Schneid- und/oder Mischwerkzeuge zu erhöhen. Es ist bekannt, die Nutzungsdauer eines derartigen Schneid- und/oder Mischwerkzeugs, insbesondere Schars, dadurch zu erhöhen, dass dasselbe an seiner Spitze und/oder an seinem Hauptverschleißpunkt mit einem oder mehreren Voll-Hartmetallplättchen oder einer oder mehreren Voll-Hartmetallplatten auf Wolframbasis versehen wird.

US 5 427 186 A offenbart beispielsweise ein Schneid- und/oder Mischwerkzeug für ein landwirtschaftliches Gerät, insbesondere für ein Bodenbearbeitungsgerät, bei dem das Schneid- und/oder Mischwerkzeug einen vorzugsweise aus Stahl bestehenden Grundkörper aufweist, der im Bereich der zum Boden weisenden Spitze, auf der in den Boden eingreifenden Vorderseite mit einer in den Grundkörper vollumfänglich eingelassenen Voll-Hartmetallplatte versehen ist.

Vorgenannte Voll-Hartmetallplättchen oder -platten, dem Fachmann allgemein bekannt als 'Widia' Material, verfügen über einen diamantähnlichen bzw. enorm hohen Verschleißwiderstand und werden bei Bodenbearbeitungsgeräten bevorzugt auf der in den Boden eingreifenden Vorderseite, üblicherweise im Bereich der Spitze derartiger Schneid- und/oder Mischwerkzeuge, insbesondere Schare, geklemmt, geschraubt, geklebt, geschweißt oder vorzugsweise aufgelötet. Hierzu kann in dem vorzugsweise aus Stahl bestehenden Grundkörper des Schneid- und/oder Mischwerkzeugs eine Freimachung für das Hartmetallplättchen bzw. die Hartmetallplatte vorgesehen sein.

Bei Schneid- und/oder Mischwerkzeugen, die beispielsweise eine gelötete Voll-Hartmetallplatte an ihrer Spitze aufweisen, führt bei der Bodenbearbeitung das Abgleiten des Gegenstoffes, respektive Erdbodens, an der dem Erdboden zugewandten Oberfläche des Schneid- und/oder Mischwerkzeugs zum Materialabtrag der gesamten restlichen Werkzeugoberfläche, also derjenigen Oberfläche, welche die Voll-Hartmetallplatte nicht aufweist. Der der Voll-Hartmetallplatte angrenzende Bereich unterliegt somit starken Auswaschungen während der Bodenbearbeitung. Dies führt zu einer erheblichen Standzeitreduzierung dieser relativ teuren und in der Herstellung aufwendigen Schneid- und/oder Mischwerkzeuge.

Um diese Auswaschungen zu vermeiden, ist bekannt, auf der in den Boden eingreifenden Vorderseite des Schneidwerkzeugs, vorzugsweise Schars, im Abstand zum mindestens einen Hartmetallplättchen oder zur mindestens einen Hartmetallplatte mehrere voneinander beabstandete, quer zur Fahrtrichtung verlaufende spezielle Schweißnähte oder andersartig partiell angeordnete, insbesondere schuppenartige Auftragungen aufzuschweißen.

Derart angeordnete Schweißnähte oder partiell angeordnete, insbesondere schuppenartige Auftragungen sollen den besonders durch Abrieb und Verschleiß gefährdeten Bereich eines Schneid- und/oder Mischwerkzeugs schützen und so die Nutzungsdauer verlängern.

Nachteilig ist jedoch, dass der vorzugsweise aus Stahl bestehende Grundkörper des Schneid- und/oder Mischwerkzeugs, insbesondere Schars, vor, hinter oder neben den rippenartig angeordneten Schweißnähten oder partiellen Auftragungen ebenfalls ausgewaschen werden kann, so dass es an den geschwächten Stellen insbesondere zum Bruch des Grundkörpers kommen kann, weit bevor das Standzeitende des mit der oder den Voll-Hartmetallplättchen oder -platten versehenen Bereichs des Schneid- und/oder Mischwerkzeugs erreicht ist.

Nachteilig an der rippenartigen Anordnung ist zudem, dass diese nicht unerhebliche Widerstände während der Bodenbearbeitung darstellen, was zu einem erhöhten Zugkraftbedarf und mithin Kraftstoffverbrauch führt.

Ausgehend von diesem Stand der Technik liegt der Erfindung die Aufgabe zugrunde, ein Verschleißteil, nämlich ein Schneid- und/oder Mischwerkzeug, vorzugsweise ein Schar, eines Bodenbearbeitungsgerätes bzw. für ein Bodenbearbeitungsgerät derart weiterzuentwickeln, dass das Schneid- und/oder Mischwerkzeug, vorzugsweise das Schar, mit relativ geringem Materialeinsatz ein verbessertes Verschleißverhalten, einen geringeren Zugkraftbedarf, einen geringen Kraftstoffverbrauch aufweist und in der Vollkostenrechnung deutlich produktiver ist.

Diese Aufgabe wird bei einem Schneid- und/oder Mischwerkzeug, vorzugsweise einem Schar, das einen vorzugsweise aus Stahl bestehenden Grundkörper aufweist und im Bereich der Spitze, auf der in den Boden eingreifenden Vorderseite mit wenigstens einem Voll-Hartmetallplättchen oder mit wenigstens einer Voll-Hartmetallplatte versehen ist, dadurch gelöst, dass die in den Boden eingreifende Vorderseite des Grundkörpers benachbart zu dem wenigstens einen Voll-Hartmetallplättchen und/oder zu der wenigstens einen Voll-Hartmetallplatte nicht rippenartig mit Schweißnähten oder partiellen Auftragungen, sondern vollflächig mit einer Beschichtung, vorzugsweise mit einer hochverschleißfesten Beschichtung, insbesondere aus einem gegenüber dem Grundkörper verschleißfesterem Material verstärkt ist. Dabei weist das Höhenniveau zwischen der Hartmetalloberfläche und der Beschichtungsoberfläche im Wesentlichen keine bis kaum Unterschiede auf, wobei wenigstens ein Voll-Hartmetallplättchen und/oder wenigstens eine Voll-Hartmetallplatte keine verstärkende Beschichtung aufweist.

Durch diese Maßnahme werden quer in Fahrtrichtung verlaufende Kanten, wie sie zuvor bei der rippenartigen Anordnung oder partiellen Auftragung vorhanden waren, vorteilhaft vermieden. Solche Kanten sind nicht nur verschleißanfälliger, sondern bremsen auch, erhöhen also den Zugwiderstand im Boden. Durch die erfindungsgemäße vollflächige, vorzugsweise ebene, vorzugsweise hochverschleißfeste Beschichtung und/oder vorzugsweise auf einem Höhenniveau liegende Anordnung von Hartmetalloberfläche und Beschichtungsoberfläche wird also ein verbessertes Verschleißverhalten, ein geringerer Zugkraftbedarf und ein geringerer Kraftstoffverbrauch erreicht.

Weiterhin kann es von Vorteil sein, wenn die Oberfläche der Beschichtung als relativ glatte Oberfläche ohne Vertiefungen oder Krater ausgebildet ist. Es kann also zweckmäßig sein, wenn die so genannte Rauhtiefe der Oberfläche der Beschichtung derart gering ist, dass sich der Gegenstoff, beispielsweise der Erdboden, nicht großflächig in diesen Vertiefungen oder Kratern festsetzen kann. Dadurch lässt sich vorteilhaft der Reibwiderstand auf ein Minimum reduzieren und eine entsprechende Kraftstoffeinsparung erreichen.
Es kann von Vorteil sein, wenn die vollflächige Beschichtung unmittelbar am Voll-Hartmetallplättchen bzw. an der Voll-Hartmetallplatte angrenzt und mit dieser in Kontakt ist. Eine gegebenenfalls noch minimal zwischen der vollflächigen Beschichtung und dem Hartmetallplättchen bzw. der Hartmetallplatte vorhandene Fuge kann mit einem Material verfüllt sein. Vorzugsweise kann eine solche Fuge mit demjenigen Material verfüllt sein, das zur Herstellung der Fügeverbindung zwischen Hartmetallplättchen bzw. Hartmetallplatte und Grundkörper vorgesehen ist, ganz bevorzugt mit Lötmaterial.
Es kann zweckmäßig sein, wenn der Härtegrad des Hartmetallplättchen bzw. der Hartmetallplatte größer ist als der Härtegrad der vollflächigen Beschichtung und dieser wiederum größer ist als der des vorzugsweise aus Stahl bestehenden Grundkörpers. Somit ist das Hartmetallplättchen bzw. die Hartmetallplatte härter als die Beschichtung und diese wiederum härter als der Grundkörper.

Der Grundkörper kann gegossen, geschmiedet oder aus Flach- oder Profilstahl hergestellt sein.

Bei der Beschichtung kann es sich vorteilhaft um vollflächig aufgeschweißte spezielle Schweißwerkstoffe oder anders thermisch aufgetragene Hartstoffe handeln. Die Beschichtung kann also vorzugsweise eine Auftragsschweißung oder eine andere gleich wirkende Oberflächenbelegung sein.

Es kann von Vorteil sein, wenn nicht nur die Vorderseite des Schneid- und/oder Mischwerkzeugs, vorzugsweise Schars, sondern auch deren Seiten bzw. seitliche Flanken bzw. Längsseiten eine vollflächige Beschichtung aufweisen.

Es kann von Vorteil sein, wenn das Schneid- und/oder Mischwerkzeug, vorzugsweise das Schar, mindestens ein Befestigungsteil oder eine Bohrung zum Einbringen eines Befestigungsteils aufweist. Vorzugsweise ist die Beschichtung bei Vorhandensein einer Bohrung nicht unmittelbar an die Bohrung herangeführt, sondern endet wenige, vorzugsweise 1 bis 5 Millimeter vor der Bohrungskante.

Es kann von Vorteil sein, wenn es sich bei den Schneid- und/oder Mischwerkzeugen um Bodenbearbeitungswerkzeuge allgemein, vorzugsweise Grubberschare, Meißel oder um Pflugschare handelt.

Weitere vorteilhafte Ausgestaltungen der Erfindung ergeben sich auch aus der nachfolgenden Beschreibung einiger erfindungsgemäßer Ausführungsbeispiele sowie aus der zugehörigen Zeichnung. In dieser zeigen:
- Fig. 1: einen ersten Schar in a) perspektivischer Draufsicht und b) im Querschnitt entlang der Schnittlinie A-A
- Fig. 2: einen zweiten Meißel in a) perspektivischer Draufsicht und b) im Querschnitt entlang der Schnittlinie B-B
- Fig. 3: einen dritten Schar in a) perspektivischer Draufsicht und b) im Querschnitt entlang der Schnittlinie C-C

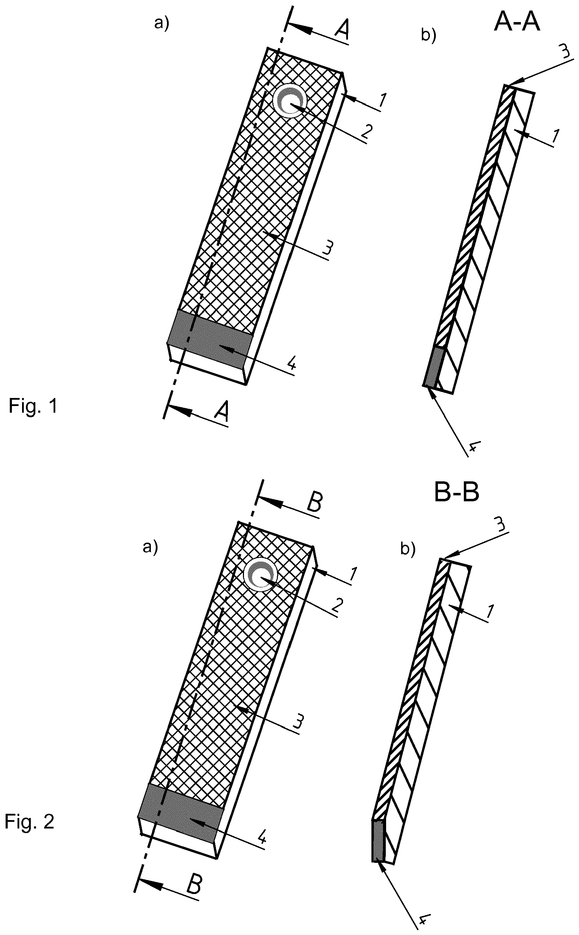

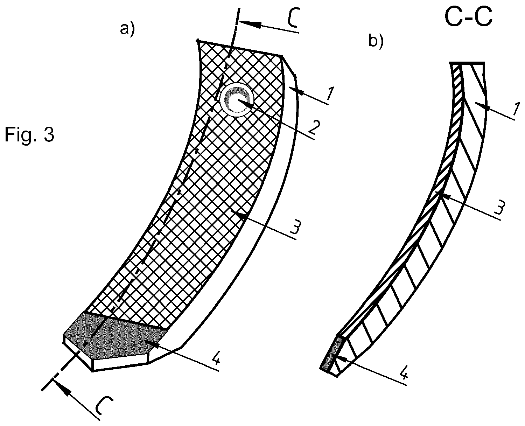

Werden in den Fig. 1 bis 3 gleiche Bezugsziffern verwendet, so bezeichnen diese gleiche Teile, so dass zwecks Vermeidung von Wiederholungen nicht bei jeder Figurenbeschreibung auf ein bereits beschriebenes Bauteil erneut eingegangen wird.

Die in den Fig. 1 bis 3 dargestellten Schneid- und/oder Mischwerkzeuge bzw. Schare weisen jeweils einen aus Stahl bestehenden Grundkörper 1 auf, der im Bereich der zum Boden weisenden Spitze, auf der in den Boden eingreifenden Vorderseite mit einer Voll-Hartmetallplatte 4 versehen ist.

Erfindungsgemäß ist die in den Boden eingreifende Vorderseite des Grundkörpers 1 vollflächig mit einer hochverschleißfesten Beschichtung 3 verstärkt.

In den jeweiligen Querschnittansichten b) ist gut zu erkennen, dass das Höhenniveau zwischen der Oberfläche der Voll-Hartmetallplatte 4 und der Oberfläche der-Beschichtung 3 im Wesentlichen keinen Unterschied aufweist und die Oberfläche der Beschichtung 3 als relativ glatte Oberfläche ohne Vertiefungen oder Krater ausgebildet ist.

Die vollflächige Beschichtung 3 grenzt unmittelbar an die Voll-Hartmetallplatte 4 an.

Zudem kann das jeweilige Schneid- und/oder Mischwerkzeug - wie vorliegend - mindestens eine Bohrung zum Einbringen eines Befestigungsteils aufweisen, um das Schneid- und/oder Mischwerkzeug an vorgegebener Stelle eines Stiels oder Grindels des landwirtschaftlichen Gerätes zu befestigen.

Die erfindungsgemäße Beschichtung 3 ist in diesem Fall unmittelbar an die Bohrung 2 herangeführt, sondern endet wenige Millimeter vor der Bohrungskante.

## Patentansprüche

1. Schneid- und/oder Mischwerkzeug, vorzugsweise Schar, für ein landwirtschaftliches Gerät, insbesondere für ein Bodenbearbeitungsgerät, bei dem das Schneid- und/oder Mischwerkzeug einen vorzugsweise aus Stahl bestehenden Grundkörper (1) aufweist, der zumindest im Bereich der zum Boden weisenden Spitze, auf der in den Boden eingreifenden Vorderseite mit wenigstens einem Voll-Hartmetallplättchen und/oder wenigstens einer Voll-Hartmetallplatte (4) versehen ist, **dadurch gekennzeichnet, dass** die in den Boden eingreifende Vorderseite des Grundkörpers (1) mit einer vollflächigen Beschichtung (3), unmittelbar angrenzend am Voll-Hartmetallplätchen bzw. an der Voll-Hartmetallplatte (4), verstärkt ist, wobei die Voll-Hartmetalloberfläche keine verstärkende Beschichtung aufweist und wobei das Höhenniveau zwischen der Hartmetalloberfläche und der Beschichtungsoberfläche im Wesentlichen keine Unterschiede aufweist.

2. Schneid- und/oder Mischwerkzeug nach Anspruch 1, **dadurch gekennzeichnet, dass** die vollflächige Beschichtung (3) hochverschleißfest ist.

3. Schneid- und/oder Mischwerkzeug nach einem der Ansprüche 1 oder 2,
**dadurch gekennzeichnet, dass** die Oberfläche der Beschichtung (3) als relativ glatte Oberfläche ohne Vertiefungen oder Krater ausgebildet ist.

4. Schneid- und/oder Mischwerkzeug nach einem der Ansprüche 1 bis 3,
**dadurch gekennzeichnet, dass** die Rauhtiefe der Oberfläche der Beschichtung (3) derart gering ist, dass das während der Bodenbearbeitung mit der Beschichtung (3) in Berührung kommende Material, insbesondere der Erdboden, nicht großflächig in diesen Vertiefungen oder Kratern festsetzt.

5. Schneid- und/oder Mischwerkzeug nach einem der Ansprüche 1 bis 4,
**dadurch gekennzeichnet, dass** die vollflächige Beschichtung (3) unmittelbar am Voll-Hartmetallplättchen bzw. an der Voll-Hartmetallplatte (4) angrenzt und mit dieser in Kontakt ist.

6. Schneid- und/oder Mischwerkzeug nach Anspruch 5, **dadurch gekennzeichnet, dass** eine noch minimal zwischen der vollflächigen Beschichtung (3) und dem Hartmetallplättchen bzw. der Hartmetallplatte (4) vorhandene Fuge mit einem Material verfüllt ist, vorzugsweise mit demjenigen Material verfüllt ist, das zur Herstellung der Fügeverbindung zwischen Hartmetallplättchen bzw. der Hartmetallplatte (4) und Grundkörper (1) vorgesehen ist, ganz bevorzugt Lötmaterial.

7. Schneid- und/oder Mischwerkzeug nach einem der Ansprüche 1 bis 6,
**dadurch gekennzeichnet, dass** der Härtegrad des Hartmetallplättchen bzw. der Hartmetallplatte (4) größer ist als der Härtegrad der vollflächigen Beschichtung (3) und dieser wiederum größer ist als der des vorzugsweise aus Stahl bestehenden Grundkörpers (1).

8. Schneid- und/oder Mischwerkzeug nach einem der Ansprüche 1 bis 7,
**dadurch gekennzeichnet, dass** der Grundkörper (1) gegossen, geschmiedet oder aus Flach- oder Profilstahl hergestellt ist.

9. Schneid- und/oder Mischwerkzeug nach einem der Ansprüche 1 bis 8,
**dadurch gekennzeichnet, dass** das Beschichtungsmaterial ein Werkstoff ist, der thermisch auf die Oberfläche des Grundkörpers (1) aufgetragen ist.

10. Schneid- und/oder Mischwerkzeug nach Anspruch 9, **dadurch gekennzeichnet, dass** das Beschichtungsmaterial ein Werkstoff ist, der auf die Oberfläche des Grundkörpers (1) aufgeschweißt ist.

11. Schneid- und/oder Mischwerkzeug nach einem der Ansprüche 1 bis 10,
**dadurch gekennzeichnet, dass** neben der Vorderseite auch die Längsseiten eine vollflächige Beschichtung aufweisen.

12. Schneid- und/oder Mischwerkzeug nach einem der Ansprüche 1 bis 11,
**dadurch gekennzeichnet, dass** das Schneid- und/oder Mischwerkzeug mindestens ein Befestigungsteil oder eine Bohrung (2) zum Einbringen eines Befestigungsteils aufweist.

13. Schneid- und/oder Mischwerkzeug nach Anspruch 12, **dadurch gekennzeichnet, dass** die Beschichtung (3) bei Vorhandensein einer Bohrung (2) nicht unmittelbar an die Bohrung (2) herangeführt, sondern wenige, vorzugsweise 1 bis 5 Millimeter vor der Bohrungskante endet.

14. Schneid- und/oder Mischwerkzeug nach einem der Ansprüche 1 bis 13,
**dadurch gekennzeichnet, dass** das Schneid- und/oder Mischwerkzeug ein Grubberschar ist.

15. Schneid- und/oder Mischwerkzeug nach einem der Ansprüche 1 bis 13,
**dadurch gekennzeichnet, dass** das Schneid- und/oder Mischwerkzeug ein Meißel ist.

16. Schneid- und/oder Mischwerkzeug nach einem der Ansprüche 1 bis 13,
**dadurch gekennzeichnet, dass** das Schneid- und/oder Mischwerkzeug ein Pflugschar ist.

## Claims

1. A cutting and/or mixing tool, preferably a share, for an agricultural device, in particular for a soil cultivation device, in which the cutting and/or mixing tool has a base body (1) preferably made from steel,
which, at least in the region of the tip facing the soil, is provided with at least one solid carbide chip and/or at least one solid carbide plate (4) on the front side which engages in the soil,
**characterised in that** the front side of the base body (1), which engages in the soil, is reinforced with a full-surface coating (3) immediately adjacent to the solid carbide chip or to the solid carbide plate (4), wherein the solid carbide surface does not have a reinforcing coating and wherein there are substantially no differences in height between the carbide surface and the coating surface.

2. The cutting and/or mixing tool according to Claim 1, **characterised in that** the full-surface coating (3) is highly resistant to wear.

3. The cutting and/or mixing tool according to one of Claims 1 or 2, **characterised in that** the surface of the coating (3) is formed as a relatively smooth surface without depressions or craters.

4. The cutting and/or mixing tool according to one of Claims 1 to 3, **characterised in that** the depth of roughness of the surface of the coating (3) is so slight that the material, in particular the earth, which comes into contact with the coating (3) when cultivating the soil does not settle extensively in these depressions or craters.

5. The cutting and/or mixing tool according to one of Claims 1 to 4, **characterised in that** the full-surface coating (3) is directly adjacent to the solid carbide chip or the solid carbide plate (4) and is in contact therewith.

6. The cutting and/or mixing tool according to Claim 5, **characterised in that** a gap which is still minimally present between the full-surface coating (3) and the carbide chip or the carbide plate (4) is filled with a material, preferably filled with that material which is provided for producing the joint between the carbide chip or the carbide plate (4) and the base body (1), preferably soldering material.

7. The cutting and/or mixing tool according to one of Claims 1 to 6, **characterised in that** the hardness grade of the carbide chip or the carbide plate (4) is higher than the hardness grade of the full-surface coating (3) and this is in turn higher than that of the base body (1), which is preferably made from steel.

8. The cutting and/or mixing tool according to one of Claims 1 to 7, **characterised in that** the base body (1) is cast, forged or produced from flat or sectional steel.

9. The cutting and/or mixing tool according to one of Claims 1 to 8, **characterised in that** the coating material is a substance which is thermally applied to the surface of the base body (1).

10. The cutting and/or mixing tool according to Claim 9, **characterised in that** the coating material is a substance which is welded onto the surface of the base body (1).

11. The cutting and/or mixing tool according to one of Claims 1 to 10, **characterised in that,** in addition to the front side, the longitudinal sides also have a full-surface coating.

12. The cutting and/or mixing tool according to one of Claims 1 to 11, **characterised in that** the cutting and/or mixing tool has at least one mounting part or a bore (2) for inserting a mounting part.

13. The cutting and/or mixing tool according to Claim 12, **characterised in that,** if a bore (2) is present, the coating (3) does not lead directly up to the bore (2) but ends a few millimeters, preferably 1 to 5 millimeters, before the bore edge.

14. The cutting and/or mixing tool according to one of Claims 1 to 13, **characterised in that** the cutting and/or mixing tool is a cultivator share.

15. The cutting and/or mixing tool according to one of Claims 1 to 13, **characterised in that** the cutting and/or mixing tool is a cutter.

16. The cutting and/or mixing tool according to one of Claims 1 to 13, **characterised in that** the cutting and/or mixing tool is a plough share.

## Revendications

1. Outil de coupe et/ou de mélange, de préférence un soc, pour un outil agricole, notamment pour un outil de travail du sol, dont l'outil de coupe et/ou de mélange présente un corps principal (1), de préférence en acier, dont la face avant, qui pénètre dans le sol, est pourvue, au moins dans la zone de la pointe dirigée vers le sol, d'au moins une plaquette et/ou une plaque (4) entièrement en métal dur,
**caractérisé en ce que** la face avant pénétrant dans le sol du corps principal (1) est renforcée par un revêtement (3) déposé sur toute la surface et jouxtant la plaquette ou la plaque (4) entièrement en métal dur, la surface entièrement en métal dur ne présentant pas de revêtement de renforcement et le niveau de hauteur entre la surface entièrement en métal dur et la surface du revêtement ne présentant essentiellement pas de différences.

2. Outil de coupe et/ou de mélange suivant la revendication 1, **caractérisé en ce que** le revêtement (3) déposé sur toute la surface est extrêmement résistant à l'usure.

3. Outil de coupe et/ou de mélange suivant une des revendications 1 ou 2,
**caractérisé en ce que** la surface du revêtement (3) est conçue comme surface relativement lisse sans évidements ou cratères.

4. Outil de coupe et/ou de mélange suivant une des revendications 1 à 3,
**caractérisé en ce que** la profondeur de rugosité de la surface du revêtement (3) est aussi faible, que le matériau, notamment le sol, qui entre en contact avec le revêtement lorsque le sol est travaillé, ne s'incruste pas dans ces évidements ou cratères sur une grande surface.

5. Outil de coupe et/ou de mélange suivant une des revendications 1 à 4,
**caractérisé en ce que** le revêtement (3) déposé sur toute la surface jouxte immédiatement la plaquette ou la plaque (4) entièrement en métal dur de sorte à être en contact avec celle-ci.

6. Outil de coupe et/ou de mélange suivant la revendication 5, **caractérisé en ce qu'**un intervalle minime, qui existe toujours entre le revêtement (3) déposé sur toute la surface et la plaquette ou la plaque (4) entièrement en métal dur, est rempli d'un matériau, de préférence du matériau prévu pour la réalisation de l'assemblage de jonction entre la plaquette ou la plaque (4) entièrement en métal dur et le corps principal (1), tout particulièrement un matériau de brasage.

7. Outil de coupe et/ou de mélange suivant une des revendications 1 à 6,
**caractérisé en ce que** le degré de dureté de la plaquette ou de la plaque (4) entièrement en métal dur est supérieur au degré de dureté du revêtement déposé sur toute la surface (3) et celui-ci est à son tour supérieur au degré de dureté du corps principal (1) qui est de préférence en acier.

8. Outil de coupe et/ou de mélange suivant une des revendications 1 à 7,
**caractérisé en ce que** le corps principal (1) est moulé, forgé ou fabriqué en acier plat ou en acier profilé.

9. Outil de coupe et/ou de mélange suivant une des revendications 1 à 8,
**caractérisé en ce que** le matériau de revêtement est un matériau déposé par voie thermique sur la surface du corps principal (1).

10. Outil de coupe et/ou de mélange suivant la revendication 9, **caractérisé en ce que** le matériau de revêtement est un matériau qui est soudé sur la surface du corps principal (1).

11. Outil de coupe et/ou de mélange suivant une des revendications 1 à 10,
**caractérisé en ce que** non seulement la face avant, mais encore les côtés longs présentent un revêtement sur l'ensemble de leur surface.

12. Outil de coupe et/ou de mélange suivant une des revendications 1 à 11,
**caractérisé en ce que** l'outil de coupe et/ou de mélange présente au moins un élément de fixation ou un alésage destiné à l'insertion d'un élément de fixation.

13. Outil de coupe et/ou de mélange suivant la revendication 12, **caractérisé en ce que** le revêtement (3) ne s'étend pas immédiatement jusqu'à l'alésage, mais se termine quelques millimètres, de préférence 1 à 5 millimètres devant le bord de l'alésage.

14. Outil de coupe et/ou de mélange suivant une des revendications 1 à 13,
**caractérisé en ce que** l'outil de coupe et/ou de mélange est un soc de cultivateur.

15. Outil de coupe et/ou de mélange suivant une des revendications 1 à 13,
**caractérisé en ce que** l'outil de coupe et/ou de mélange est un soc de chisel.

16. Outil de coupe et/ou de mélange suivant une des revendications 1 à 13,
**caractérisé en ce que** l'outil de coupe et/ou de mélange est un coutre de charrue.
